# EUROPÄISCHE PATENTSCHRIFT

(11) **EP 1 426 647 B1**
(45) Veröffentlichungstag und Bekanntmachung des Hinweises auf die Patenterteilung: **21.06.2006**
(21) Anmeldenummer: 03019960.8
(22) Anmeldetag: 03.09.2003
(51) Int. Cl.: F16F 1/36, F16F 15/08

(54) **Verfahren zur Herstellung eines Tragarms**
Support arm and method for its production
Bras de support et méthode pour sa réalisation

(30) Priorität: 04.12.2002 DE 10256580
(43) Veröffentlichungstag der Anmeldung: 09.06.2004
(60) Teilanmeldung: 05015494.7
(73) Patentinhaber: Carl Freudenberg KG, 69469 Weinheim (DE)
(72) Erfinder: Simuttis, Arnold, Dr., 55545 Bad Kreuznach (DE)

(56) Entgegenhaltungen:
- DE-A- 3 437 784
- DE-C- 19 617 992
- FR-A- 2 809 996
- GB-A- 228 023
- US-A- 4 549 726
- US-A1- 2002 163 113
- PATENT ABSTRACTS OF JAPAN vol. 017, no. 358 (M-1440), 7. Juli 1993 (1993-07-07) & JP 05 050860 A (SHOWA ALUM CORP;OTHERS: 01), 2. März 1993 (1993-03-02)

## Beschreibung

Die Erfindung betrifft Verfahren zur Herstellung eines Tragarms, umfassend einen ersten Halter, der an einem ersten Maschinenelement festlegbar ist und einen zweiten Halter, der an einem zweiten Maschinenelement festlegbar ist, wobei der erste Halter und der zweite Halter mittels eines Federkörpers aus elastomerem Werkstoff elastisch nachgiebig miteinander verbunden sind.

### Stand der Technik

Ein solcher Tragarm ist aus der DE 34 37 784 A1 bekannt. Der Tragarm gelangt als Triebwerksaufhängung zur Anwendung, wobei der Triebwerksblock durch Träger aus Kunststoff jeweils unter Zwischenschaltung eines Elastomerteils mit der Karosserie verbunden ist. Das jeweilige Elastomerteil ist Bestandteil eines Dämpfungsblocks und bildet zugleich eine Einheit mit dem Träger. Hierzu ist es mit einem Zapfen eines der Träger verbunden. Durch den Dämpfungsblock werden eingeleitete Schwingungen gedämpft.
Das Elastomerteil, das den Dämpfungsblock und zusammen mit dem Träger eine Einheit bildet, kann mit dem Träger verklebt, in den Träger eingepresst oder eingeknüpft oder auf den Zapfen des Trägers aufvulkanisiert sein.

Aus der GB 228 023 A ist ein Tragarm bekannt, bei dem ein Zapfen von einem Lager mit radialem Abstand außenumfangsseitig umschlossen ist, wobei in dem durch den Abstand gebildeten Spalt ein Federkörper aus Gummi angeordnet ist. Der Zapfen und das Lager berühren sich an keiner Stelle unmittelbar anliegend, sodass beide Teile durch den Federkörper schwingungsisolierend miteinander verbunden sind.

Ein weiterer Tragarm ist aus der US 4,549,726 bekannt. Der Tragarm kann für die Aufhängung eines Motors oder Getriebes eines Kraftfahrzeugs verwendet werden, ist einstückig ausgebildet und besteht aus einem Faserverbundwerkstoff mit orientierten Fasern. Eine zusätzliche Dämpfungswirkung soll dadurch erzielt werden, dass zwischen einzelnen Faserverbundwerkstoff-Lagen elastische Zwischenschichten angeordnet sind. Die Zwischenschichten können dabei aus einem elastomeren Werkstoff bestehen.

### Darstellung der Erfindung

Der Erfindung liegt die Aufgabe zugrunde, ein Verfahren zur Herstellung eines Tragarms zu zeigen, das einfach und kostengünstig durchführbar ist und durch das ein Tragarm entsteht, der gute Gebrauchseigenschaften während einer langen Gebrauchsdauer aufweist.

Diese Aufgabe wird erfindungsgemäß durch das Verfahren gemäß Anspruch 1 gelöst. Auf eine vorteilhafte Weiterbildung des Verfahrens nimmt Anspruch 2 Bezug.

Zur Lösung der Aufgabe ist ein Verfahren vorgesehen, bei dem der elastomere Werkstoff des Federkörpers unmittelbar auf den zweiten Halter aufgespritzt wird, wobei die Einheit aus zweitem Halter und Federkörper im Anschluß an die Verfestigung des Federkörpers kraft- und/oder formschlüssig mit dem ersten Halter verbunden wird.

Der elastomere Werkstoff des Federkörpers wird unmittelbar auf den zweiten Halter aufgespritzt, und zwar ohne die Verwendung von Bindemitteln. Wie zuvor bereits ausgeführt, wird durch die ungebundene Zuordnung des Federkörpers zum zweiten Halter Schrumpf des elastomeren Werkstoffs bei dessen Verfestigung und Erkaltung vermieden; der gebrauchsfertige Federkörper weist dadurch keine die Gebrauchsdauer verringernden inneren Schrumpfspannungen auf.

Die Einheit, bestehend aus dem zweiten Halter und dem Federkörper, wird kraft- und/oder formschlüssig mit dem ersten Halter verbunden. Die Verbindung der vormontierten Einheit mit dem ersten Halter kann beispielsweise dadurch erfolgen, dass die Einheit durch die Halteeinrichtung mit dem ersten Halter verbunden wird.

Im Anschluss an die Montage der vormontierten Einheit in den ersten Halter ist der Federkörper bevorzugt unter elastischer Druck-Vorspannung innerhalb seines Einbauraums gehalten.

Bevorzugt ist der Federkörper als Gummistrumpf ausgebildet und ungebunden zwischen dem ersten und dem zweiten Halter angeordnet. Der Federkörper kann beispielsweise aus Silikonkautschuk oder einem Elastomerschaum bestehen, wobei die Dicke des Federkörpers bevorzugt 1 bis 8, weiter bevorzugt 3 bis 6 mm beträgt.

Durch die ungebundene Anordnung des Federkörpers zwischen den beiden Haltern werden Gebrauchsdauer verringernde Schrumpfspannungen vermieden und die Kosten der Herstellung reduziert. Durch die Vermeidung von Schrumpfspannungen weist der Tragarm insgesamt eine sehr gute Haltbarkeit während einer langen Gebrauchsdauer auf.

Vorteilhaft für ein definiertes Verspannen des äußeren und des inneren Halters ist, den Federkörper an seinen tragenden Flächen mit einem Profil zu versehen. Durch eine gezielte Vorspannung und die Profilgestaltung können die für die Isolationsfunktion notwendigen Federraten eingestellt werden.

Ein weiterer Vorteil des erfindungsgemäßen Tragarms ist darin zu sehen, dass er durch den Federkörper als Wärmeisolator zwischen den abzustützenden Maschinenelementen wirkt. Gelangt der Tragarm beispielsweise als Motortragarm zur Anwendung und das erste Maschinenelement besteht aus der Kurbelgehäusewand einer Verbrennungskraftmaschine und das zweite Maschinenelement aus einem schwingungsdämpfenden Lager, wird die vom ersten Maschinenelement entwickelte Wärme nur in sehr geringem Maße über den Tragarm auf das zweite Maschinenelement übertragen. Speziell dann, wenn das zweite Maschinenelement ein hydraulisch dämpfendes Lager ist, ist die Wärmeisolierung von Vorteil; das hydraulisch dämpfende Lager weist dadurch, weitgehend unabhängig von der Wärmeentwicklung des ersten Maschinenelements gleichbleibend gute Gebrauchseigenschaften während einer langen Gebrauchsdauer auf. Im Hinblick auf die in zunehmendem Maße immer stärker gekapselten Motorräume ist die Wärmeisolierung von hervorzuhebendem Vorteil.

Der zweite Halter und der Federkörper bilden eine vormontierbare Einheit, die mittels einer Halteeinrichtung mit dem ersten Halter verbunden wird. Die Herstellung und Montage des Tragarms ist dadurch insgesamt sehr vereinfacht.

### Kurzbeschreibung der Zeichnung

Ein Ausführungsbeispiel des erfindungsgemäßen Tragarms wird nachfolgend anhand der Figuren 1 bis 3 näher erläutert. Diese zeigen jeweils in schematischer Darstellung:
- Fig. 1: eine perspektivische Darstellung des Tragarms,
- Fig. 2: einen Längsschnitt durch den Tragarm gemäß der Linie A-A aus Fig. 3 und
- Fig. 3: eine Draufsicht auf den Tragarm aus Fig. 2.

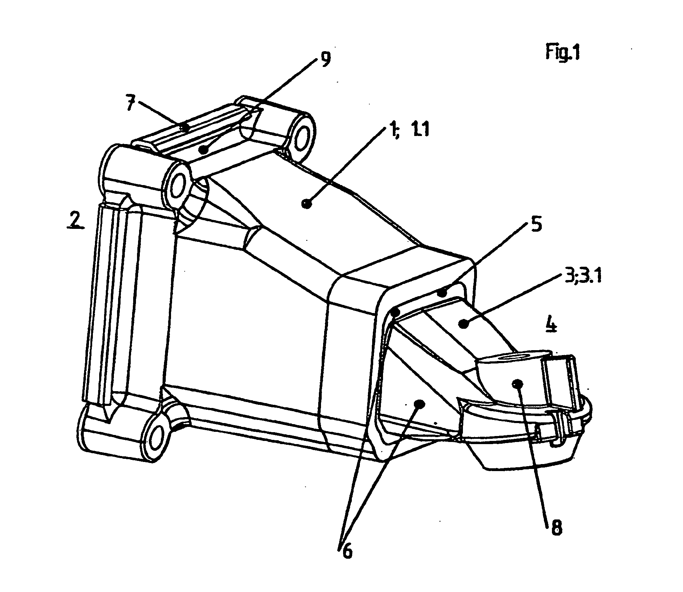

In Fig. 1 ist ein Ausführungsbeispiel eines Tragarms in perspektivischer Darstellung gezeigt. Der Tragarm wird als Motortragarm in Kraftfahrzeugen verwendet und verbindet das erste Maschinenteil 2, das durch die Kurbelgehäusewand der Verbrennungskraftmaschine gebildet ist, mit dem zweiten Maschinenelement 4, das durch ein hydraulisch dämpfendes Lager gebildet ist, wobei auf der dem zweiten Halter 3 abgewandten Seite des zweiten Maschinenelements 4 eine Befestigung am Chassis des Kraftfahrzeugs erfolgt. Der besseren Übersichtlichkeit wegen, sind das erste Maschinenelement 2 und das zweite Maschinenelement 4 nur durch die Bezugszeichen angedeutet, jedoch zeichnerisch nicht dargestellt.

Der Tragarm umfasst im Wesentlichen vier Teile, die einander ungehaftet und mit Ausnahme der Halteeinrichtung 7 zerstörungsfrei lösbar zugeordnet sind. Der erste Halter 1 ist als äußerer Halter 1.1 ausgebildet und umschließt den zweiten Halter 3, der den inneren Halter 3.1 bildet, außenumfangsseitig mit Ausnahme des Flanschs 8, an dem das zweite Maschinenelement 4 befestigbar ist. Die Verbindung der beiden Halter 1, 3 miteinander erfolgt mittels des Federkörpers 5, der aus elastomerem Werkstoff besteht, beispielsweise aus Silikonkautschuk oder Elastomerschaum. Im hier gezeigten Ausführungsbeispiel entspricht die Dicke des Federkörpers 5 etwa der Dicke des ersten und zweiten Halters 1, 3, wobei die Dicke des Federkörpers 5 bevorzugt 3 bis 6 mm beträgt. Um eine wirkungsvolle Schwingungsentkopplung zwischen dem ersten Maschinenelement 2 und dem zweiten Maschinenelement 4 zu erreichen, berühren sich der erste und zweite Halter 1, 3 an keiner Stelle unmittelbar.

Die Halteeinrichtung 7 ist durch ein Stützblech gebildet und hält die vormontierte Einheit 6, bestehend aus dem zweiten Halter 3 und dem Federkörper 5, innerhalb des ersten Halters 1.

Durch die, im Längsschnitt betrachtet, konische Gestalt zumindest einer Begrenzungswandung des zweiten Halters 3, ist dessen Montage in den ersten Halter 1 sehr einfach möglich, da sich eine Anlageberührung des auf dem zweiten Halter 3 angeordneten Federkörpers 5 mit seiner Oberfläche am ersten Halter 1 erst in der hier dargestellten Endposition ergibt. Unerwünschter abrasiver Verschleiß des Federkörpers 5 während der Montage wird dadurch sicher verhindert. Durch die Anordnung des zweiten Halters 3 und des Federkörpers 5 innerhalb des ersten Halters 1 sind diese inneren Bestandteile des Tragarms ausgezeichnet vor äußeren Einflüssen geschützt, sodass der Tragarm gleichbleibend gute Gebrauchseigenschaften während der gesamten Gebrauchsdauer aufweist.

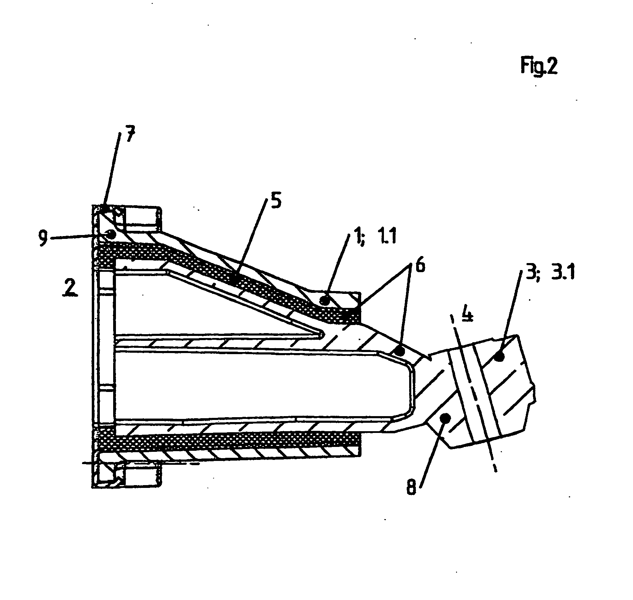

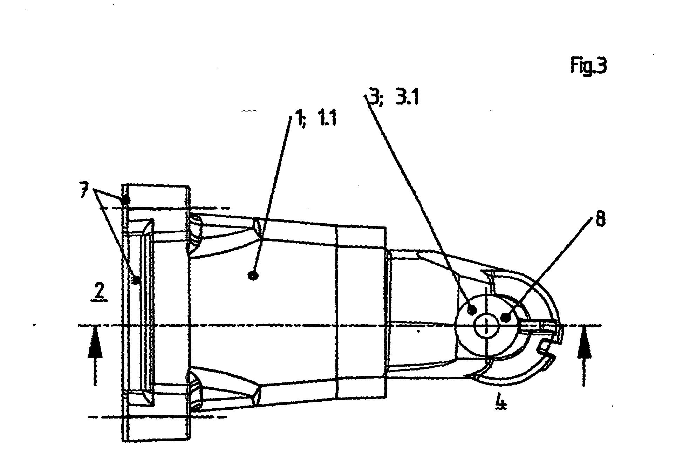

In Fig. 2 ist ein Längsschnitt entlang der Linie A-A aus Fig. 3 gezeigt. Der Federkörper 5 weist entlang seiner gesamten axialen Erstreckung eine weitgehend gleichmäßige Dicke auf, wobei der Federkörper 5 auch die dem zweiten Maschinenelement 4 abgewandte Stirnseite des zweiten Halters 3 in radialer Richtung vollständig überdeckt.

Die Befestigung der Einheit 6, bestehend aus dem zweiten Halter 3 und dem Federkörper 5, der ungebunden in Form eines Gummistrumpfs am zweiten Halter 3 festgelegt ist, erfolgt durch einen Formschluss der Halteeinrichtung 7 mit dem ersten Halter 1. Der Formschluss wird durch eine Umbördelung der Halteeinrichtung 7 hinter einem Radialflansch 9 des ersten Halters 1 erreicht.

In Fig. 3 ist eine Draufsicht auf den Tragarm aus Fig. 2 gezeigt.

Der Federkörper 5 innerhalb des Tragarms bewirkt eine Isolierung akustisch störender, hochfrequenter Schwingungen, die beispielsweise durch Antriebsketten einer Verbrennungskraftmaschine, beispielsweise zum Antrieb einer Nockenwelle, angeregt werden. Die Schwingungsisolierung erfolgt dabei in einem Frequenzbereich, der höher liegt, als der Frequenzbereich üblicher Motorlager.

Der zweite Halter 3 bildet die Tilgermasse des als Schwingungstilger ausgebildeten Tragarms, wobei der Tragarm bevorzugt als Motortragarm zur Anwendung gelangt.

## Patentansprüche

1. Verfahren zur Herstellung eines Tragarms, umfassend einen ersten Halter (1), der an einem ersten Maschinenelement (2) festlegbar ist und einen zweiten Halter (3), der an einem zweiten Maschinenelement (4) festlegbar ist, wobei der erste Halter (1) und der zweite Halter (3) mittels eines Federkörpers (5) aus elastomerem Werkstoff elastisch nachgiebig miteinander verbunden sind, **dadurch gekennzeichnet, dass** der elastomere Werkstoff des Federkörpers (5) unmittelbar auf den zweiten Halter (3) aufgespritzt wird und dass die Einheit (6) aus zweitem Halter (3) und Federkörper (5) im Anschluss an die Verfestigung des Federkörpers (5) kraft- und/oder formschlüssig mit dem ersten Halter (1) verbunden wird.

2. Verfahren nach Anspruch 1, **dadurch gekennzeichnet, dass** die Einheit (6) durch eine Halteeinrichtung (7) mit dem ersten Halter (1) verbunden wird.

## Claims

1. Method for production of a support arm comprising a first bracket (1), which can be fixed to a first machine element (2), and a second bracket (3), which can be fixed to a second machine element (4), the first bracket (1) and the second bracket (3) being connected to one another in an elastically flexible manner by means of a spring body (5) made from elastomeric material, **characterized in that** the elastomeric material of the spring body (5) is moulded directly onto the second bracket (3), and **in that**, subsequent to the solidification of the spring body (5), the unit (6) comprising the second bracket (3) and the spring body (5) is connected in a non-positive and/or positive manner to the first bracket (1).

2. Method according to Claim 1, **characterized in that** the unit (6) is connected to the first bracket (1) by means of a holding device (7).

## Revendications

1. Procédé de fabrication d'un bras de support, comprenant un premier soutien (1), qui peut être fixé à un premier élément de machine (2), et un deuxième soutien (3), qui peut être fixé à un deuxième élément de machine (4), dans lequel le premier soutien (1) et le deuxième soutien (3) sont assemblés l'un à l'autre de façon élastiquement souple au moyen d'un corps élastique (5) en un matériau élastomère, **caractérisé en ce que** le matériau élastomère du corps élastique (5) est projeté directement sur le deuxième soutien (3) et **en ce que** l'unité (6) composée du deuxième soutien (3) et du corps élastique (5) est assemblée en continuité de force et/ou de forme au premier soutien (1) à la suite du durcissement du corps élastique (5).

2. Procédé selon la revendication 1, **caractérisé en ce que** l'unité (6) est assemblée au premier soutien (1) par un dispositif de support (7).
